# EUROPEAN PATENT APPLICATION

(11) **EP 4 207 899 A1**
(43) Date of publication of application: **05.07.2023**
(21) Application number: 20955512.7
(22) Date of filing: 29.09.2020
(51) Int. Cl.: H04W 72/04, H04W 76/14

(54) **CHANNEL OCCUPANCY TIME SHARING METHOD AND DEVICE NODE**

(71) Applicant: GUANGDONG OPPO MOBILE TELECOMMUNICATIONS CORP., LTD., Dongguan, Guangdong 523860 (CN)
(72) Inventor: HU, Rongyi, Dongguan, Guangdong 523860 (CN)
(74) Representative: Penza, Giancarlo
(86) International application number: PCT/CN2020/118758
(87) International publication number: WO 2022/067484

(57) **Abstract**

Provided are a channel occupancy time sharing method, a device node and a computer-readable storage medium. A COT sharing mechanism is introduced to realize COT sharing. Many instances of LBT between different device nodes is prevented. The aim of realizing more rapid and efficient communication within one COT can be achieved. The method embodiment of the present invention may comprise: a first device node acquiring first resources shared by a second device node, wherein the first resources are some resources within a channel occupancy time (COT) when the second device node initiates the COT during first channel access.

## Description

### Technical Field

The present invention relates to the communication field, in particular to a channel occupancy time sharing method, a device node, and a computer-readable storage medium.

### Background

A node in a Sidelink may become a relay node, that is, it has both forward transmission and backward transmission. If Listen Before Talk (LBT) is performed in a simple one-to-one manner, multiple LBTs may need to be performed to preempt Channel Occupancy Time (COT) of different channels, so that communication with different device nodes (such as A-B, B-C) can be achieved. However, multiple LBTs cause waste of time and system resources.

### Summary

Embodiments of the present invention provide a channel occupancy time sharing method, a device node, and a computer-readable storage medium. A COT sharing mechanism is introduced to achieve COT sharing, avoiding multiple LBTs between different device nodes, achieving a purpose of faster and more efficient communication within one COT.

In a first aspect of the embodiments of the present invention, a channel occupancy time sharing method is provided, which may include: acquiring, by a first device node, a first resource shared by a second device node, wherein the first resource is a part of resources within Channel Occupancy Time (COT) when the second device node accesses a first channel and initiates the COT.

In a second aspect of the embodiments of the present invention, a device node is provided, which has functions of introducing a COT sharing mechanism, achieving COT sharing, avoiding multiple LBTs between different device nodes, and achieving faster and more efficient communication within one COT. The functions may be implemented by hardware, or may be implemented by hardware executing corresponding software. The hardware or software includes one or more modules corresponding to the foregoing functions.

In another aspect of the embodiments of the present invention, a device node is provided, including: a memory storing executable program codes; a transceiver and a processor coupled to the memory. The processor and the transceiver are configured to perform the method described in the first aspect of the embodiments of the present invention.

In another aspect of the embodiments of the present invention, a computer-readable storage medium is provided, including instructions that, when run on a computer, enable the computer to perform the method as described in the first aspect of the present invention.

In another aspect of the embodiments of the present invention, a computer program product containing instructions is provided, wherein when being executed on a computer, the computer program product enables the computer to perform the method as described in the first aspect of the present invention.

In another aspect of the embodiments of the present invention, a chip is provided, and the chip is coupled to a memory in the terminal device, so that the chip when running invokes program instructions stored in the memory to enable the terminal device to perform the method as described in the first aspect of the present invention.

In technical solutions provided by the embodiments of the present invention, a first device node acquires a first resource shared by a second device node, and the first resource is a part of resources within Channel Occupancy Time (COT) when the second device node accesses a first channel and initiates the COT. That is, a COT sharing mechanism is introduced to achieve COT sharing, avoiding multiple LBTs between different device nodes, and achieving a purpose of faster and more efficient communication within one COT.

### Brief Description of Drawings

FIG. 1 is a diagram of an example of COT sharing on a base station side.
FIG. 2 is a schematic diagram of COT sharing of Configured Grant-Physical Uplink Shared Channel (CG-PUSCH) in the prior art.
FIG. 3A is a schematic diagram of a scenario to which an embodiment of the present invention is applied.
FIG. 3B is a system architecture diagram of a communication system to which an embodiment of the present invention is applied.
FIG. 4A is a schematic diagram of one embodiment of a channel occupancy time sharing method according to an embodiment of the present invention.
FIG. 4B is a schematic diagram of COT sharing between a first device node and a second device node according to an embodiment of the present invention.
FIG. 4C is another schematic diagram of COT sharing between a first device node and a second device node according to an embodiment of the present invention.
FIG. 4D is a schematic diagram of COT sharing among a first device node, a second device node, and a third device node according to an embodiment of the present invention.
FIG. 4E is another schematic diagram of COT sharing among a first device node, a second device node, and a third device node according to an embodiment of the present invention.
FIG. 4F is another schematic diagram of COT sharing among a first device node, a second device node, and a third device node according to an embodiment of the present invention.
FIG. 5 is a schematic diagram of one embodiment of a device node according to an embodiment of the present invention.
FIG. 6 is a schematic diagram of another embodiment of a device node according to an embodiment of the present invention.

### Detailed Description

Technical solutions in the embodiments of the present invention will be described below in combination with the drawings in the embodiments of the present invention. It is apparent that the embodiments described are merely some of the embodiments of the present invention, but not all of the embodiments of the present invention. All other embodiments obtained by those skilled in the art based on the embodiments of the present invention without paying an inventive effort shall fall into the protection scope of the present invention.

At first a brief description of some terms involved in the present invention is made, as follows.

### 1. Channel Occupancy Time (COT) sharing

Compared with Release 15 (R15) New Radio (NR), in an NR-based access to Unlicensed spectrum (NR-U) system, channel transmission in a Random Access Channel (RACH) procedure needs to consider an influence of channel access. In order to reduce delay in a RACH procedure due to a Listen Before Talk (LBT) failure as far as possible, the followings are adopted.

On one hand, COT sharing (which may be referred to Section 18.2.2 for details) is also supported in the RACH procedure. When a base station sends a Msg2, COT obtained by the base station may be shared with a User Equipment (UE) for transmission of a Msg3. Otherwise, when sending the Msg3, the UE needs to perform LBT to obtain channel access, there is a possibility that LBT will fail, thus causing transmission delay of the Msg3. In the above solution, when the base station sends the Msg2, the base station may carry a LBT type that the UE needs to use for sending the Msg3 in the Msg2 according to its own COT situation.

On the other hand, when the base station sends the Msg2, considering a potential LBT failure problem, the base station may not be able to obtain channel access in time within a Random Access Response (RAR) reception window of the UE, resulting in a failure to send the Msg2. Therefore, a maximum length of a RAR reception window in an NR-U system is expanded, that is, a maximum RAR reception window of 10ms defined in R15 is expanded to 40ms, so that the base station may have more time to perform channel access, avoiding that a RAR is unable to be sent in time due to LBT failure.

### 2. Dynamic channel monitoring

Dynamic channel monitoring may also be considered as an LBT mode of Load-Based Equipment (LBE). Its channel monitoring principle is that a communication device performs LBT on a carrier of an unlicensed spectrum after a service arrives, and starts sending a signal on the carrier after LBT is successful. An LBT mode of dynamic channel monitoring includes a Type 1 (Type1) channel access mode and a Type 2 (Type2) channel access mode.

The Typel channel access mode is multi-slot channel sensing with random backoff based on an adjusted contention window size, wherein a corresponding Channel Access Priority Class (CAPC) p may be selected according to a priority of a service to be transmitted.

The Type2 channel access mode is a channel access mode based on monitoring slot of a fixed length, wherein the Type2 channel access mode includes Type2A channel access, Type2B channel access, and Type2C channel access.

The Typel channel access mode is mainly used for a communication device to initiate channel occupancy, and the Type2 channel access mode is mainly used for a communication device to share channel occupancy.

### 3. COT Sharing on a base station side

After a base station initiates COT, the base station may not only use resources within the COT for downlink transmission, but also share the resources within the COT to a UE for uplink transmission. When the resources within the COT are shared to the UE for uplink transmission, a channel access mode that the UE may use is Type2A channel access, Type2B channel access, or Type2C channel access, wherein the Type2A channel access, the Type2B channel access, and the Type2C channel access are all channel access modes based on monitoring slot of a fixed length.

Type2A channel access: A channel sensing mode of a UE is single slot channel sensing of 25 µs. Specifically, under the Type2A channel access, the UE may perform channel monitoring of 25 µs before starting transmission, and then perform transmission after success of the channel monitoring.

Type2B channel access: A channel sensing mode of a UE is single slot channel sensing of 16 µs. Specifically, under the Type2B channel access, the UE may perform channel monitoring of 16 µs before starting transmission, and then perform transmission after success of the channel monitoring. Herein, a size of a gap between a starting position of this transmission and an ending position of a previous transmission is 16 µs.

Type2C channel access: A UE performs transmission without channel sensing after a gap ends. Specifically, under the Type2C channel access, the UE may perform transmission directly, wherein a size of a gap between a starting position of this transmission and an ending position of a previous transmission is less than or equal to 16 µs. Herein, a length of this transmission does not exceed 584 µs.

Different channel access solutions are applied in different COT sharing scenarios. If a gap between a starting position of an uplink transmission opportunity in COT of a base station and an ending position of a downlink transmission opportunity is less than or equal to 16 µs, a UE may perform Type2C channel access before the uplink transmission. If the gap between the starting position of this uplink transmission opportunity and the ending position of the downlink transmission opportunity is equal to 16 µs, the UE may perform Type2B channel access before the uplink transmission. If the gap between the starting position of this uplink transmission opportunity and the ending position of the downlink transmission opportunity is equal to or greater than 25 µs, the UE may perform Type2A channel access before the uplink transmission.

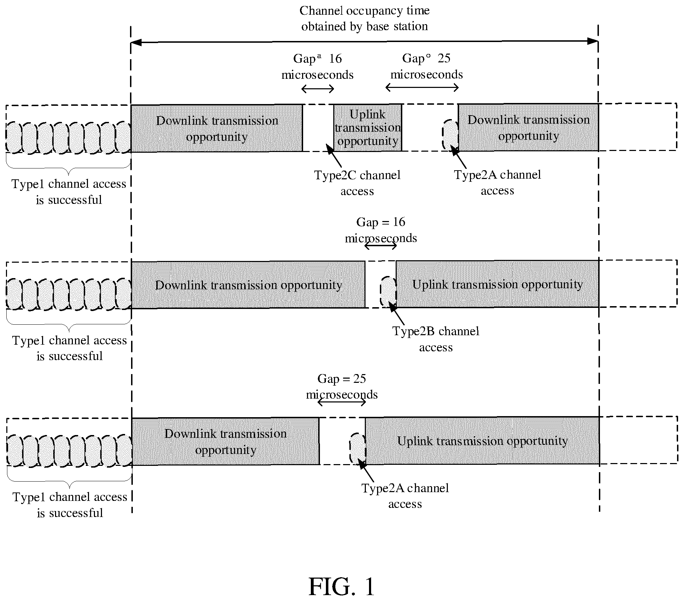

In addition, multiple uplink and downlink transition points may be included in the COT obtained by the base station. After the base station shares the COT obtained by itself to the UE for uplink transmission, within the COT the base station may also use a Type2 channel access mode such as a Type2A channel access mode for channel monitoring, and restart downlink transmission after the channel monitoring is successful. FIG. 1 shows a diagram of an example of COT sharing on a base station side.

When a base station shares obtained COT to a UE for uplink transmission, a principle of COT sharing includes that a channel access priority corresponding to an uplink service which the UE will transmit through shared COT should not be lower than a channel access priority used when the base station obtains the COT. In a COT sharing process on the base station side, under some channel access modes, a gap between a starting position of an uplink transmission opportunity and an ending position of a downlink transmission opportunity needs to meet a requirement of 16 µs or 25 µs. A principle of COT sharing and a requirement of a size of a gap may be guaranteed and indicated by the base station, and the base station may indicate a channel access mode in the shared COT to the UE in an explicit or implicit manner.

The base station may explicitly indicate channel access parameters such as a length of a Cyclic Prefix Extension (CPE), a channel access mode, or a channel access priority to the UE by means of joint coding.

Backoff Uplink (UL) grant (Downlink Control Information (DCI) format 0_0) for scheduling an Physical Uplink Shared Channel (PUSCH) transmission; backoff Downlink (DL) grant (DCI format 1_0) for scheduling a PDSCH transmission; non-backoff UL grant (DCI format 0_1) for scheduling a PUSCH transmission; and non-backoff DL grant (DCI format 1_1) for scheduling a PDSCH transmission.

The base station may also implicitly indicate a channel access mode within COT. When the UE receives Uplink grant (UL grant) or Downlink grant (DL grant) sent by the base station indicating that a channel access type corresponding to the PUSCH or a Physical Uplink Control Channel (PUCCH) is Typel channel access, if the UE may determine that the PUSCH or PUCCH belongs to COT of the base station, for example, the UE receives DCI format 2_0 sent by the base station and determines that the PUSCH or PUCCH belongs to the COT of the base station according to the DCI format 2_0, then the UE may update the channel access type corresponding to the PUSCH or PUCCH as Type2A channel access instead of adopting the Typel channel access.

### 4. Channel occupancy sharing on a UE side

When a UE initiates COT by using Typel channel access, in addition to using resources within the COT for uplink transmission, the UE may also share the resources within the COT to a base station for downlink transmission. In an NR-U system, that a base station shares COT initiated by a UE includes two situations, one is that the base station shares COT of a scheduled PUSCH, and the other is that the base station shares COT of a Configured grant (CG) PUSCH.

For the case where the base station shares the COT of the scheduled PUSCH, if the base station configures an energy sensing threshold for COT sharing to the UE, the UE should use the configured energy sensing threshold for COT sharing for channel access. In this case, an LBT access parameter of the UE and a resource for transmitting a PUSCH are indicated by the base station, so that the base station may know resource information available within the COT after the UE initiates the COT, thereby achieving COT sharing under a condition that the UE is transparent.

For a case where the base station shares COT of a Configured Grant Physical Uplink Shared Channel (CG PUSCH), CG PUSCH transmitted by the UE carries Configured Grant-Uplink Control Information (CG-UCI), and the CG-UCI may include an indication of whether to share COT obtained by the UE to the base station. If the base station configures an energy sensing threshold for COT sharing to the UE, the UE should use the configured energy sensing threshold for COT sharing for channel access. Accordingly, COT sharing indication information in the CG-UCI may indicate that a starting position and a length of COT of the UE shared by the base station, and different Channel Access Priority Class (CAPC) information used when the UE acquires the COT. If the base station does not configure an energy sensing threshold for COT sharing to the UE, COT sharing indication information in the CG-UCI includes 1 bit for indicating whether the base station may share or cannot share COT of the UE. Without an energy sensing threshold configured for COT sharing, a starting position of COT that may be shared by the base station is determined according to a high-layer configuration parameter, a length of a shareable COT is preset, and the base station may only use the shared COT to transmit common control information.

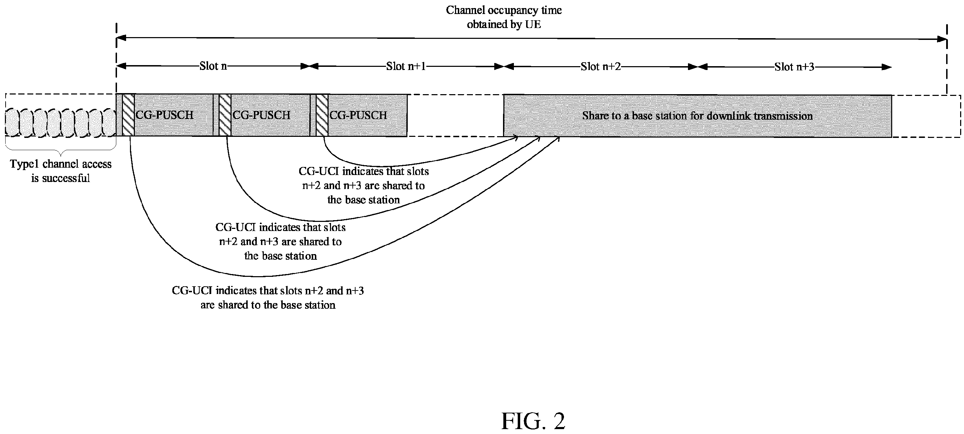

Combination of sidelink transmission and an Unlicensed spectrum, on one hand, may inherit a communication mode of sidelink based on no network node, and on the one hand, also needs to inherit a Listen Before Talk (LBT) mechanism of the Unlicensed spectrum. So a COT sharing mechanism in an LBT mechanism is also applicable to sidelink, but related uplink and downlink channels in a cellular network are no longer applicable, and channels in sidelink are no longer divided into uplink and downlink. Moreover, a node in Sidelink may become a relay node, that is, it has both forward transmission and backward transmission. If LBT is performed in a simple one-to-one manner, multiple LBTs may need to be performed to preempt communication occupancy time (COT) of different channels, so that communication with different nodes (such as A-B and B-C) can be achieved. To sum up, there is room for further optimization of a COT sharing solution for a sidelink relay scenario. In principle, a signaling design (CG-UCI) indicating a proportion and a position of shared COT may be consistent with the existing design in an NR-U system. As shown in FIG. 2, it is a schematic diagram of COT sharing of CG-PUSCH in the prior art. In illustration of FIG. 2, a schematic diagram is given in which multiple CG-UCI signalings indicate COT sharing and shared COTs are superimposed to another node.

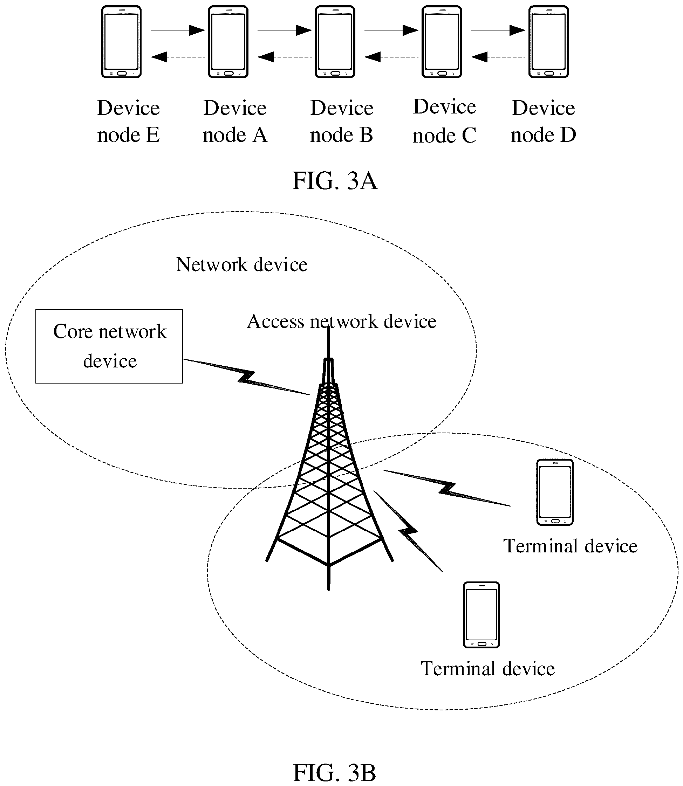

As shown in FIG. 3A, it is a schematic diagram of a scenario to which an embodiment of the present invention is applied. The embodiment of the present invention may be applied to a scenario where communication is performed between at least two device nodes. In illustration of FIG. 3A, description is made by taking five device nodes as an example. Communications of Device node E-device node A, device node A-device node B, device node B-device node C, and device node C-device node D are performed respectively. When each device node accesses a first channel and initiates Channel Occupancy Time (COT), a part of resources within the COT may be shared to another device node for communication. Transmission channels for E-A, A-B, B-C, A-C, and C-D in the present invention may be carried on the unlicensed frequency band. The present invention may be applied to sidelink scenarios, new radio scenarios, or long term evolution scenarios, etc. That is, it may be a resource configuration (NR-U) based on network A scheduling (mode 1), it may be a resource configuration (SL-U) based on autonomous scheduling (mode 2), or it may be a resource configuration based on other scheduling, which is not specifically limited in the embodiments of the present invention. A device node may include a mobile phone, a watch, a headphone, and another device.

As show in FIG. 3B, it is a system architecture diagram of a communication system to which an embodiment of the present invention is applied. The communication system may include a network device. The network device may be a device that communicates with a terminal device (or referred to as a communication terminal, or a terminal). The network device may provide communication coverage for a specific geographical region, and may communicate with terminal devices located within the coverage region. FIG. 3B exemplarily shows one network device and two terminal devices. Optionally, the communication system may include multiple network devices, and other quantity of terminal devices may be included within a coverage range of each network device, which is not limited in the embodiments of the present application. Optionally, the communication system may also include another network entity, such as a network controller and a mobile management entity, which is not limited in the embodiments of the present application. Herein, the device node in the embodiments of the present invention may be a network device or a terminal device, which is not specifically limited.

Various embodiments of the present application are described in combination with the network device and the terminal device. The terminal device may also be referred to as a User Equipment (UE), an access terminal, a subscriber unit, a subscriber station, a mobile station, a mobile platform, a remote station, a remote terminal, a mobile device, a user terminal, a terminal, a wireless communication device, a user agent or a user apparatus, etc.

The terminal device may be a STATION (ST) in a WLAN, or a cellular phone, a cordless phone, a Session Initiation Protocol (SIP) phone, a Wireless Local Loop (WLL) station, a Personal Digital Assistant (PDA) device, a handheld device with a wireless communication function, a computing device, or another processing device connected to a wireless modem, a vehicle-mounted device, a wearable device, or a terminal device in a next generation communication system, e.g., an NR network, or a terminal device in a future evolved Public Land Mobile Network (PLMN), etc.

In an embodiment of the present application, a terminal device may be deployed on land including indoor or outdoor, handheld, wearable or vehicle-mounted terminal device; or it may be deployed on water (such as on ships, etc.); or it may be deployed aerially (such as in airplanes, balloons and satellites, etc.).

In an embodiment of the present application, the terminal device may be a mobile phone, a Pad, a computer with wireless transceiving function, a virtual reality (VR) terminal device, an augmented reality (AR) terminal device, a wireless terminal device in industrial control, a wireless terminal device in self-driving, a wireless terminal device in remote medicine, a wireless terminal device in smart grid, a wireless terminal device in transportation safety, a wireless terminal device in smart city, or a wireless terminal device in smart home, etc.

As an example rather than limitation, in the embodiments of the present application, the terminal device may be a wearable device. The wearable device may also be referred to as a wearable smart device, which is a general term of wearable devices developed by intelligent design on daily wear by applying wearable technology, such as glasses, gloves, a watch, clothing and shoes. The wearable device is a portable device that is worn directly on a body, or integrated into clothes or accessories of users. The wearable device not only is a hardware device, but also implements powerful functions through software support as well as data interaction or cloud interaction. Generalized wearable smart devices include devices which are fully functional, have large sizes, and may implement complete or partial functions without relying on smart phones, such as a smart watch or smart glasses, and devices which focus on a certain kind of application functions only and need to be used in conjunction with other devices (such as smart phones), such as various smart bracelets, smart jewelries or the like for monitoring physical signs.

The network device may also include an access network device and a core network device. That is, a wireless communication system also includes multiple core networks that communicate with the access network device. The access network device may be an evolutional node B (eNB or e-NodeB), a macro base station, a micro base station (also referred to as a "small base station"), a pico base station, an Access Point (AP), a Transmission Point (TP), or a new generation Node B (gNodeB) in a Long-Term Evolution (LTE) system, a next-generation mobile communication system (New Radio (NR)) system, or an authorized Auxiliary Access Long-Term Evolution (LAA-LTE) system.

In an embodiment of the present application, the network device may be a device used for communicating with a mobile device, or may be an Access Point (AP) in the WLAN, a Base Transceiver Station (BTS) in GSM or CDMA, a NodeB (NB) in WCDMA, an evolutional Node B (eNB or eNodeB) in LTE, a relay station or an access point, a vehicle-mounted device, a wearable device, a network device (gNB) in the NR network, a network device in a future evolved PLMN network, or a network device in an NTN network, etc.

As an example rather than limitation, in an embodiment of present application, the network device may be of mobility, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. Optionally, the network device may be a base station disposed in a position on land or a water region etc.

In an embodiment of the present application, the network device may provide a service for a cell, and the terminal device communicates with the network device through a transmission resource (e.g., a frequency domain resource, which is also referred to as a spectrum resource) used by the cell, wherein the cell may be a cell corresponding to the network device (e.g., a base station), and the cell may belong to a macro base station, or may belong to a base station corresponding to a Small cell. The Small cell herein may include a Metro cell, a Micro cell, a Pico cell, or a Femto cell, etc. The Small cells are characterized by a small coverage range and a low transmission power, and are suitable for providing high-speed data transmission services.

It should be understood that a device with a communication function in a network/system in the embodiments of the present application may also be referred to as a communication device. Taking the communication system shown in FIG. 3B as an example, a communication device may include a network device and terminal devices which have communication functions, and the network device and the terminal devices may be specific devices described in the embodiments of the present application, and will not be repeated herein. The communication device may also include another device in the communication system, for example, another network entity such as a network controller and a mobility management entity, which is not limited in the embodiments of the present application.

Technical solutions according to embodiments of the present application may be applied to various communication systems, such as a Global System of Mobile Communication (GSM) system, a Code Division Multiple Access (CDMA) system, a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system of the NR system, an LTE-based access to unlicensed spectrum (LTE-U) system, an NR-based access to unlicensed spectrum (NR-U) system, a Non-Terrestrial Networks (NTN) system, a Universal Mobile Telecommunications System (UMTS), Wireless Local Area Networks (WLAN), Wireless Fidelity (WiFi), a 5th-generation (5G) communication system, or another communication system, etc.

Generally, traditional communication systems support a limited quantity of connections, and are easy to implement. However, with the development of communication technology, mobile communication systems will not only support traditional communications, but also support, for example, Device to Device (D2D) communication, Machine to Machine (M2M) communication, Machine Type Communication (MTC), Vehicle to Vehicle (V2V) communication, or Vehicle to everything (V2X) communication, etc., and the embodiments of the present application may be applied to these communication systems as well.

The communication system in the embodiments of the present application may be applied to a Carrier Aggregation (CA) scenario, or a Dual Connectivity (DC) scenario, or a Standalone (SA) network deployment scenario.

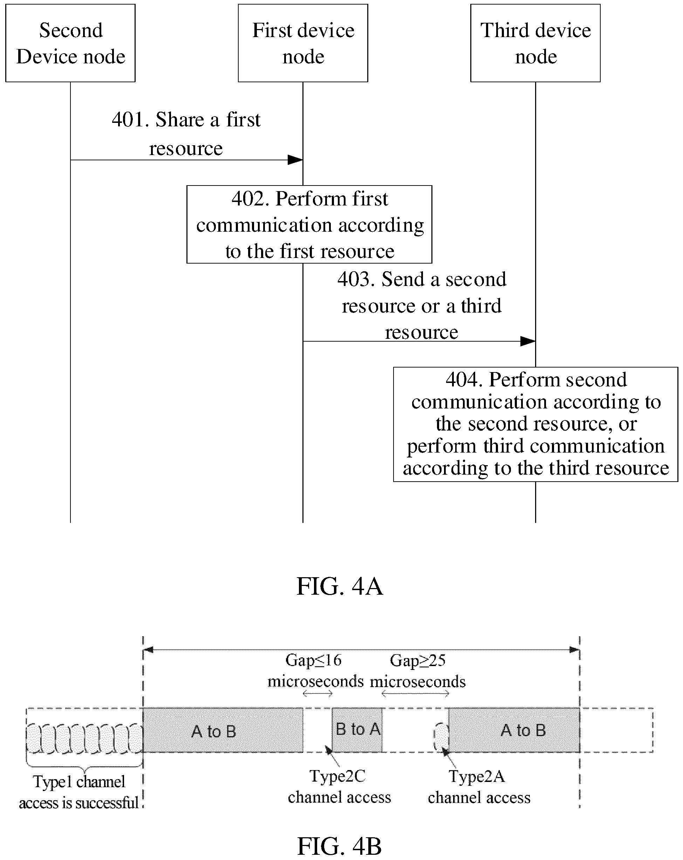

Technical solutions of the present invention will be further explained below by way of embodiments. As shown in FIG. 4A, it is a schematic diagram of an embodiment of a channel occupancy time sharing method in an embodiment of the present invention, and the method may include following acts.

In 401, a first device node acquires a first resource shared by a second device node, wherein the first resource is a part of resources within Channel Occupancy Time (COT) when the second device node accesses a first channel and initiates the COT.

Optionally, the second device node is a device node that communicates directly or indirectly with the first device node. It may be understood that direct communication may be understood as communication between the first device node and the second device node without another device node, and indirect communication may be understood as communication between the first device node and the second device node through at least one other device node.

Exemplarily, in conjunction with FIG. 3A, assuming that the first device node is a device node B, then the second device node may be a device node E or a device node A. The device node E may be considered as a device node communicating indirectly with the device node B, and the device node A may be considered as a device node communicating directly with the device node B. Descriptions are made below respectively according to situations.
(1) Description is made by taking a case where a first device node is a device node B and a second device node is a device node E as an example. When accessing a first channel and initiating Channel Occupancy Time (COT), the device node E may share a part of resources within the COT to a device node A and a device node B for use. Herein, a first resource shared by the device node E to the device node B is forwarded through the device node A. That is, the device node E configures part of the resources of the COT, and after configuration, the device node E shares them with the device node A and the device node B for communication.
(2) Description is made by taking a case where a first device node is a device node B and a second device node is a device node A as an example. When accessing a first channel and initiating Channel Occupancy Time (COT), a device node E may share a part of resources within the COT to the device node A for use, and the device node A then shares a first resource in the part of the resources shared by the device node E to the device node A, to the device node B for use. That is, the device node E configures a part of the resources of the COT, and after configuration, the device node E shares the part of the resources to the device node A for communication. However, the device node A may further perform configuration again on the part of resources configured by the device node E to itself, and after configuration, and shares to the device node B for communication.
(3) Description is made by taking a case where a first device node is a device node B and a second device node is a device node A as an example, and when accessing a first channel and initiating Channel Occupancy Time (COT), the device node A may share a first resource within the COT to the device node B for use. That is, the device node A configures a part of resources of the COT, and after configuration, shares the part of the resources to the device node B for communication.

Optionally, the first channel may include but is not limited to: a Physical Sidelink Share Channel (PSSCH), a Physical Sidelink Control Channel (PSCCH), a Physical Sidelink Broadcast Channel (PSBCH), and a Physical Sidelink Feedback Channel (PSFCH).

Exemplarily, when the device node A accesses a channel of a sidelink (such as PSSCH or PSCCH) and initiates COT, in addition to using resources within the COT for sidelink transmission to a relay device node B, the resources within the COT may also be shared to the device node B for back-haul transmission, forward transmission, broadcast, unicast, or multicast for sidelink. As shown in FIG. 4B, it is a schematic diagram of COT sharing between a first device node and a second device node according to an embodiment of the present invention. As shown in FIG. 4B, COT preempted in forward transmission of a device node A, i.e., transmission from the device node A to a device node B, is shared to the device node B for back-haul transmission (transmission from B to A).

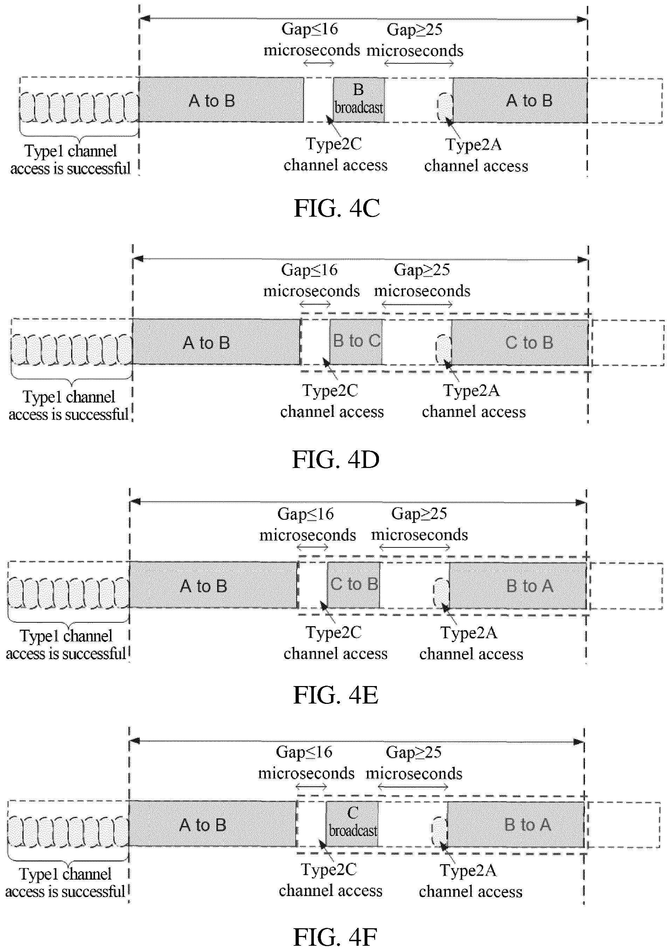

As shown in FIG. 4C, it is another schematic diagram of COT sharing between a first device node and a second device node according to an embodiment of the present invention. As shown in FIG. 4C, COT preempted in forward transmission of a device node A, i.e., transmission from the device node A to a device node B, is shared to the device node B for broadcast.

Optionally, the first resource is a part of resources within the COT that meets a first condition, and the first condition includes at least one of a first starting position, a first time length, and a first proportion.

Optionally, the first channel is carried on an unlicensed frequency band.

Optionally, a mode of initiating channel occupancy time includes a Typel channel access mode. The Typel channel access mode is mainly used for a communication device to initiate channel occupancy.

Optionally, the COT is COT for forward transmission or back-haul transmission performed by the second device node.

Optionally, first communication includes at least one of back-haul transmission, forward transmission, broadcast, unicast, or multicast.

Optionally, the number of back-haul transmissions is at least one, the number of forward transmissions is at least one, the number of broadcasts is at least one, the number of unicasts is at least one, and the number of multicasts is at least one. That is, COT sharing allows multiple first communications within one COT, and the first communication may also be called a transition point. For example, there are multiple forward transmission transition points, multiple back-haul transmission transition points, multiple broadcasts, etc. within one COT.

Optionally, the first resource is carried through Radio Resource Control (RRC), Sidelink Control Information (SCI), Uplink Control Information (UCI), Downlink Control Information (DCI), or a reference sequence.

In 402, the first device node performs first communication according to the first resource.

Optionally, the first device node receives indication information for the first communication sent by the second device node; and the first device node performs the first communication according to the first resource and the indication information for the first communication.

Optionally, the first device node receives a channel access mode for the first communication sent by the second device node; and the first device node performs the first communication according to the first resource and the channel access mode for the first communication.

Optionally, the first device node receives indication information for the first communication and a channel access mode for the first communication, sent by the second device node; and the first device node performs the first communication according to the first resource, the channel access mode for the first communication, and the channel access mode for the first communication.

Optionally, the indication information for the first communication is carried through RRC, SCI, UCI, DCI, or a reference sequence.

Optionally, the channel access mode for first communication is carried through RRC, SCI, UCI, DCI, or a reference sequence.

It should be noted that if the first communication is forward transmission, the indication information for the first communication and the channel access mode for the first communication are usually carried through DCI, RRC, SCI, or a reference sequence. If the first communication is return communication, the indication information for the first communication and the channel access mode for the first communication are usually carried through UCI, RRC, SCI, or a reference sequence. Herein, the first resource, the indication information for the first communication, and the access mode for the first communication may be configured by the second device node.

Optionally, the channel access mode for the first communication, also referred to as a shared access mode or a transition mode of the first channel, may include, but is not limited to, a Type2A mode, a Type2B mode, or a Type2C mode. It may be understood that a channel access mode (also referred to as transition mode) of COT sharing may be consistent with that in an NR-U system (such as Type2A/2B/2C). The Type2 channel access mode is mainly used for a communication device to share channel occupancy. Herein, Type2C corresponds to transition time less than or equal to 16 µs, Type2B corresponds to transition time of 16 µs, and Type2A corresponds to transition time greater than or equal to 25 µs.

It should be noted that new COT preempted when a first device node performs first communication is shared to a second device node, which is also applicable to the solution described in the embodiment of the present invention. For example, new COT preempted when a device node B performs back-haul transmission is shared to a device node A, which is also applicable.

In the embodiment of the present invention, for Unlicensed access scenarios of sidelink, new radio, LTE, and the like, a COT sharing mechanism is introduced to achieve COT sharing, thus avoiding multiple LBTs between different device nodes, and achieving a purpose of faster and more efficient communication within one COT.

In 403, the first device node sends a second resource or a third resource to a third device node.

Optionally, in a case where the first device node is a relay node, the first device node sends a second resource or a third resource to a third device node, which may include, but is not limited to, following implementations.

Implementation one: The first device node configures a second resource for a third device node according to the first resource; the first device node shares the second resource in the first resource to the third device node, and the second resource is used for the third device node to perform second communication. That is, the second resource is configured by the first device node for the third device node according to the first resource after acquiring the first resource shared by the second device node.

Optionally, the method further includes: the first device node generates indication information for the second communication; the first device node sends the indication information for the second communication to the third device node, and the indication information for the second communication is used for the third device node to perform the second communication.

Optionally, the method further includes: the first device node generates a channel access mode for the second communication; the first device node sends the channel access mode for the second communication to the third device node, and the channel access mode for the second communication is used for the third device node to perform the second communication.

It may be understood that the indication information for the second communication and the access mode for the second communication are configured by the first device node.

Optionally, the second resource is a part of the first resource that meets a second condition, the second condition includes at least one of a second starting position, a second time length, and a second proportion. It may be understood that the first device node may allocate COT sharing again, and needs to pre-configure a ratio reserved for itself and a next device node, that is, a proportion, as well as positions relative to a starting position, time lengths, etc., to ensure timing.

Exemplarily, when a device node B acquires a first resource shared by a device node A in a channel (such as PSSCH or PSCCH) of a sidelink, the device node B may reserve a part of the first resource for its own use, and may also share a part of the first resource, that is, a second resource, to a device node C for second communication.

As shown in FIG. 4D, it is a schematic diagram of COT sharing among a first device node, a second device node, and a third device node according to an embodiment of the present invention. As shown in FIG. 4D, in transmission from a device node A to a device node B, COT preempted in forward transmission of the device node A is shared to a relay device node B for forward transmission (B to C), and the device node B may further share to a device node C to perform back-haul transmission from the device node C to the device node B (C to B).

As shown in FIG. 4E, if is another schematic diagram of COT sharing among a first device node, a second device node, and a third device node according to an embodiment of the present invention. As shown in FIG. 4E, in transmission from a device node A to a device node B, COT preempted in forward transmission of the device node A is shared to a relay device node B for back-haul transmission, and the device node B may further share to a device node C to perform back-haul transmission from the device node C to the device node B (C to B), and then back-haul transmission from the device node B to the device node A (B to A). For example, the device node A shares COT to the device node B for 20% or 200 ms (COT-1), and the device node B further shares COT-1 to the device node C (COT-2), while it is ensured that the device node C can perform back-haul transmission to the device node B first, and the device node B has remaining COT to complete back-haul transmission to the device node A (COT-3).

As shown in FIG. 4F, it is another schematic diagram of COT sharing among a first device node, a second device node, and a third device node according to an embodiment of the present invention.

Implementation two: The first device node acquires a third resource shared by the second device node to a third device node, and the third resource is a part of resources within Channel Occupancy Time (COT) when the second device node accesses a first channel and initiates the COT; the first device node shares the third resource to the third device node, and the third resource is used for the third device node to perform third communication. That is, the third resource is configured by the second device node, and the first device node may acquire the first resource and the third resource at the same time, or acquire the first resource first, then acquire the third resource, or acquire the third resource first, then acquire the first resource, and then forward the third resource to the third device node.

Optionally, the method further includes: the first device node receives indication information for the third communication sent by the second device node; the first device node sends the indication information for the third communication to the third device node, and the indication information for the third communication is used for the third device node to perform the third communication.

Optionally, the method further includes: the first device node receives a channel access mode for the third communication sent by the second device node; the first device node sends the channel access mode for the third communication to the third device node, and the channel access mode for the third communication is used for the third device node to perform the third communication.

It may be understood that the indication information for the third communication and the access mode for the third communication are configured by the second device node.

Optionally, the third resource is a part of resources within the COT that meets a third condition, the third condition includes at least one of a third starting position, a third time length, and a third proportion.

Exemplarily, a device node B acquires a first resource and a third resource shared by a device node A in a channel (e.g. PSSCH or PSCCH) of a sidelink, wherein the first resource is used for the device node B to perform first communication, and the third resource is used for the device node B to forward to a device node C, and for the device node C to perform third communication.

Optionally, second communication or third communication includes at least one of back-haul transmission, forward transmission, broadcast, unicast, or multicast.

Optionally, the number of back-haul transmissions is at least one, the number of forward transmissions is at least one, the number of broadcasts is at least one, the number of unicasts is at least one, and the number of multicasts is at least one.

Optionally, a second resource or a third resource is carried through Radio Resource Control (RRC), Sidelink Control Information (SCI), Uplink Control Information (UCI), Downlink Control Information (DCI), or a reference sequence.

Optionally, indication information for second communication, or indication information for third communication, is carried through RRC, SCI, UCI, DCI, or a reference sequence.

Optionally, a channel access mode for second communication, or a channel access mode for third communication, is carried through RRC, SCI, UCI, DCI, or a reference sequence.

Optionally, a channel access mode for second communication or a channel access mode for third communication includes: a Type2A mode, a Type2B mode, or a Type2C mode.

It should be noted that new COT preempted when a first device node performs first communication is shared to a second device node and a third device node, which is also applicable to the solution described in the embodiment of the present invention. For example, new COT preempted when a device node B performs back-haul transmission is shared to a device node A and a device node C, which is also applicable.

It may be understood that in a sidelink relay scenario, each node configures UCI independently, which may be indicated to multiple nodes more flexibly, and these nodes are parallel to each other. In a case of CG-PUSCH transmission and COT sharing, a terminal device shall ensure that COT sharing indication information in CG-UCI transmitted in multiple CG-PUSCHs continuously transmitted indicates COT sharing of a same starting position and length. If two or more levels of COT sharing may be achieved, then there is no need to perform LBT every time between sidelink nodes, and a purpose of relay communication can be achieved within one COT.

Optionally, the third device node may be a device node that communicates directly or indirectly with the first device node.

In 404, the third device node performs second communication according to the second resource, or performs third communication according to the third resource.

Implementation one: A third device node acquires a second resource shared by a second device node and performs second communication according to the second resource.

Optionally, the third device node receives indication information for the second communication sent by the second device node; and the third device node performs the second communication according to the second resource and the indication information for the second communication.

Optionally, the third device node receives a channel access mode for the second communication sent by the second device node; and the third device node performs the second communication according to the second resource and the channel access mode for the second communication.

Optionally, the third device node receives indication information for the second communication and a channel access mode for the second communication, sent by the second device node; the third device node performs the second communication according to the second resource, the channel access mode for the second communication, and the channel access mode for the second communication.

Implementation two: A third device node acquires a third resource shared by a second device node, and performs third communication according to the third resource.

Optionally, the third device node receives indication information for the third communication sent by the second device node; and the third device node performs the third communication according to the third resource and the indication information for the third communication.

Optionally, the third device node receives a channel access mode for the third communication sent by the second device node; and the third device node performs the third communication according to the third resource and the channel access mode for the third communication.

Optionally, the third device node receives indication information for the third communication and a channel access mode for the third communication sent by the second device node; the third device node performs the third communication according to the third resource, the channel access mode for the third communication, and the channel access mode for the third communication.

It may be understood that the first resource, the second resource, and the third resource mentioned in the embodiments of the present invention may be understood as indication information for the first resource, indication information for the second resource, and indication information for the third resource.

It should be noted that acts 403 and 404 are optional acts.

In the embodiment of the present invention, for Unlicensed access scenarios of multi-hop sidelink relay, new radio relay, LTE relay and the like, COT sharing optimization is introduced to achieve two-level or more than two-level COT sharing, thereby avoiding multiple LBTs between sidelink nodes, and achieving a purpose of faster and more efficient relay communication within one COT.

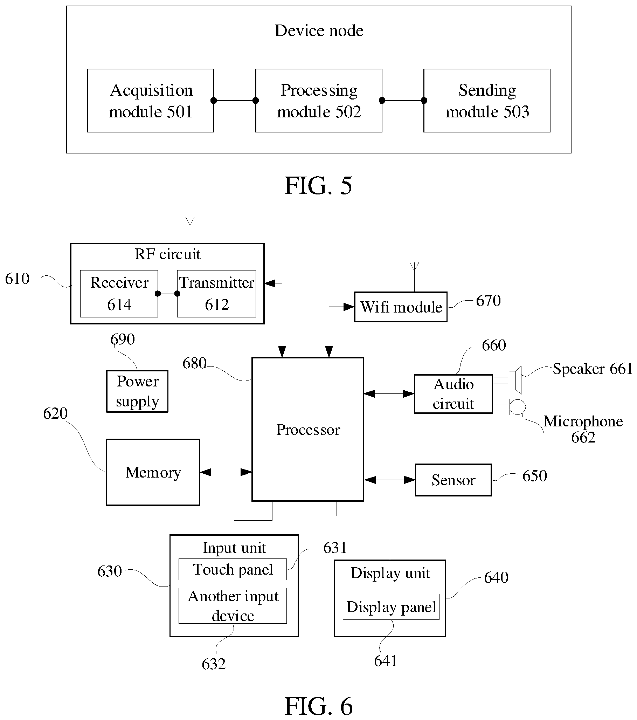

As shown in FIG. 5, FIG. 5 is a schematic diagram of one embodiment of a device node according to an embodiment of the present invention, which may include: an acquisition module 501, configured to acquire a first resource shared by a second device node, wherein the first resource is a part of resources within Channel Occupancy Time (COT) when the second device node accesses a first channel and initiates the COT.

Optionally, the device node further includes: a processing module 502, configured to perform first communication according to the first resource.

Optionally, the acquisition module 501 is further configured to receive indication information for first communication sent by the second device node; and the processing module 502 is specifically configured for a first device node to perform the first communication according to the first resource and the indication information for the first communication.

Optionally, the acquisition module 501 is further configured to receive a channel access mode for the first communication sent by the second device node; and the processing module 502 is specifically configured to perform the first communication according to the first resource and the channel access mode for the first communication.

Optionally, in a case where the first device node is a relay node, the device node further includes: a processing module 502, further configured to configure a second resource for a third device node according to the first resource; and a sending module 503, configured to share the second resource in the first resource to the third device node, wherein the second resource is used for the third device node to perform second communication.

Optionally, the processing module 502 is further configured to generate indication information for the second communication; and the sending module 503 is configured to send the indication information for the second communication to the third device node, and the indication information for the second communication is used for the third device node to perform the second communication.

Optionally, the processing module 502 is further configured to generate a channel access mode for the second communication; and the sending module 503 is configured to send the channel access mode for the second communication to the third device node, and the channel access mode for the second communication is used for the third device node to perform the second communication.

Optionally, in a case where the first device node is a relay node, the acquisition module 501 is further configured to acquire a third resource shared by the second device node to the third device node, wherein the third resource is a part of resources within Channel Occupancy Time (COT) when the second device node accesses a first channel and initiates the COT; and the sending module 503 is configured to share the third resource to the third device node, and the third resource is used for the third device node to perform third communication.

Optionally, the acquisition module 501 is further configured to receive indication information for the third communication sent by the second device node; and the sending module 503 is further configured to send the indication information for the third communication to the third device node, and the indication information for the third communication is used for the third device node to perform the third communication.

Optionally, the acquisition module 501 is further configured to receive a channel access mode for the third communication sent by the second device node; and the sending module 503 is further configured to send the channel access mode for the third communication to the third device node, and the channel access mode for the third communication is used for the third device node to perform the third communication.

Optionally, first communication, second communication, or third communication includes at least one of back-haul transmission, forward transmission, broadcast, unicast, or multicast.

Optionally, the number of back-haul transmissions is at least one, the number of forward transmissions is at least one, the number of broadcasts is at least one, the number of unicasts is at least one, and the number of multicasts is at least one.

Optionally, COT is COT for forward transmission or back-haul transmission performed by the second device node.

Optionally, a first resource is a part of resources within COT that meets a first condition, the first condition includes at least one of a first starting position, a first time length, and a first proportion; or, a second resource is a part of the first resource that meets a second condition, the second condition includes at least one of a second starting position, a second time length, and a second proportion; or, a third resource is a part of resources within the COT that meets a third condition, the third condition includes at least one of a third starting position, a third time length, and a third proportion.

Optionally, a first resource, a second resource, or a third resource is carried through Radio Resource Control (RRC), Sidelink Control Information (SCI), Uplink Control Information (UCI), Downlink Control Information (DCI), or a reference sequence.

Optionally, indication information for first communication, indication information for second communication, or indication information for third communication, is carried through RRC, SCI, UCI, DCI, or a reference sequence.

Optionally, a channel access mode for first communication, a channel access mode for second communication, or a channel access mode for third communication, is carried through RRC, SCI, UCI, DCI, or a reference sequence.

Optionally, a second device node is a device node that communicates directly or indirectly with a first device node.

Optionally, a channel access mode for first communication, a channel access mode for second communication, or a channel access mode for third communication includes: a Type2A mode, a Type2B mode, or a Type2C mode.

Optionally, the first channel is carried on an unlicensed frequency band.

The device node of the embodiment of the present application may implement any one implementation in the above methods. As shown in FIG. 6, it is a schematic diagram of another embodiment of the device node in the embodiment of the present invention. The device node is illustrated by taking a mobile phone as an example, and may include a Radio Frequency (RF) circuit 610, a memory 620, an input unit 630, a display unit 640, a sensor 650, an audio circuit 660, and a Wireless Fidelity (WiFi) module 670, a processor 680, a power supply 690, and other components. Herein, the Radio Frequency circuit 610 includes a receiver 614 and a transmitter 612. A person skilled in the art may understand that a structure of the mobile phone shown in FIG. 6 does not constitute a limitation to the mobile phone, and may include more components or fewer components than those shown in the figure, or may combine some components, or may have different component arrangements.

Below, various composition parts of the mobile phone are specifically described with reference to FIG. 6.

The RF circuit 610 may be configured to receive and transmit information, or receive and transmit signals during a call, and in particular, after receiving downlink information of a base station, send the downlink information to the processor 680 for processing; in addition, send relevant uplink data to the base station. Generally, the RF circuit 610 includes, but is not limited to, an antenna, at least one amplifier, a transceiver, a coupler, a Low Noise Amplifier (LNA), and a duplexer, etc. In addition, the RF circuit 610 may further communicate with a network and another device via wireless communication. The wireless communication may use any communication standard or protocol, including but not limited to, a Global System of Mobile communication (GSM), A General Packet Radio Service (GPRS), Code Division Multiple Access (CDMA), Wideband Code Division Multiple Access (WCDMA), Long Term Evolution (LTE), an E-mail, and a Short Messaging Service (SMS), etc.

The memory 620 may be configured to store software programs and modules, and the processor 680 executes the software programs and modules stored in the memory 620 to perform various functional applications and data processing of the mobile phone. The memory 620 may mainly include a program storage area and a data storage area. The program storage area may store an operating system, an application(s) required for at least one function (such as a sound playing function and an image playing function), and the like. The data storage area may store data (such as audio data and phone book) or the like created according to use of the mobile phone. In addition, the memory 620 may include a high speed random access memory, and may further include a non-transitory memory, such as at least one magnetic disk storage device, a flash memory, or another transitory solid-state storage device.

The input unit 630 may be configured to receive input digital or character information, and generate key signal inputs related to user settings and function control of the mobile phone. Specifically, the input unit 630 may include a touch panel 631 and another input device 632. The touch panel 631, also called a touch screen, may collect user's touch operations on or near the touch panel 631 (such as user's operations on or near the touch panel 631 by using any suitable object or accessory such as a finger or stylus), and drive a corresponding connection apparatus according to a preset program. Optionally, the touch panel 631 may include two parts, i.e., a touch sensing apparatus and a touch controller. The touch sensing apparatus detects a touch position of a user, detects a signal brought by a touch operation, and transmits the signal to the touch controller. The touch controller receives touch information from the touch sensing apparatus, converts the touch information into touch coordinates and then sends the touch coordinates to the processor 680, and can receive and execute commands from the processor 680. In addition, the touch panel 631 may be implemented in various types such as resistive, capacitive, infrared, or surface acoustic waves. In addition to the touch panel 631, the input unit 630 may also include another input device 632. Specifically, the another input device 632 may include, but is not limited to, one or more of a physical keyboard, a function key (for example, a volume control key, or a power key), a track ball, a mouse, a joystick, and so on.

The display unit 640 may be configured to display information input by a user or information provided for a user, and various menus of the mobile phone. The display unit 640 may include a display panel 641 which may optionally be configured in a form of a Liquid Crystal Display (LCD), an Organic Light-Emitting Diode (OLED), or the like. Further, the touch panel 631 may cover the display panel 641, and when the touch panel 631 detects a touch operation on or near it, the touch operation is transmitted to the processor 680 to determine a type of a touch event, and then the processor 680 provides a corresponding visual output on the display panel 641 according to the type of the touch event. Although in FIG. 6, the touch panel 631 and the display panel 641 are two independent components to implement the input and output functions of the mobile phone, in some embodiments, the touch panel 631 and the display panel 641 may be integrated to implement the input and output functions of the mobile phone.

The mobile phone may further include at least one sensor 650, such as an optical sensor, a motion sensor or another sensor. Specifically, the optical sensor may include an ambient light sensor and a proximity sensor, wherein the ambient light sensor may adjust luminance of the display screen 641 according to brightness of ambient light, and the proximity sensor may turn off the display screen 641 and/or backlight when the mobile phone is moved near an ear. As one type of the motion sensor, an accelerometer sensor may detect magnitudes of accelerations in various directions (generally three axes), and when it is stationary, may detect a magnitude and direction of a gravity, which may be used in an application for identifying a gesture of a mobile phone (for example, switching between a horizontal screen and a vertical screen, related games, and posture calibration of a magnetometer), and vibration recognition related functions (such as a pedometer and tapping). Other sensors such as a gyroscope, a barometer, a hygrometer, a thermometer, and an infrared sensor, may be also configured for the mobile phone, which will not repeated herein.

An audio circuit 660, a speaker 661, and a microphone 662 may provide audio interfaces between a user and the mobile phone. The audio circuit 660 may convert received audio data into electrical signals, transmits the converted electrical signals to the speaker 661, and the speaker 661 converts the converted electrical signals into sound signals for output. On the other hand, the microphone 662 converts collected sound signals into electrical signals, the electrical signals are received by the audio circuit 660 and converted into audio data, and after the audio data is output to the processor 680 and processed by the processor 680, the processed audio data is sent to, for example, another mobile phone via the RF circuit 610, or the processed audio data is output to the memory 620 for further processing.

WiFi belongs to a short-range wireless transmission technology. The mobile phone may help a user to send and receive e-mails, browse web pages, and access streaming media, and the like, through the WiFi module 670. The WiFi provides users with wireless broadband Internet access. Although FIG. 6 shows the WiFi module 670, it may be understood that, the WiFi module 970 is not an essential part of a mobile phone, and may be completely omitted as required without changing the essence of the present invention.

The processor 680 is a control center of the mobile phone, and connects various parts of the whole mobile phone by using various interfaces and circuits. By running or executing software programs and/or modules stored in the memory 620 and invoking data stored in the memory 620, the processor 680 performs various functions of the mobile phone and processes data, thereby performing overall monitoring on the mobile phone. Optionally, the processor 680 may include one or more processing units. Preferably, the processor 680 may be integrated with an application processor and a modulation and demodulation processor, wherein the application processor mainly processes an operating system, a user interface, an application program, and so on, and the modulation and demodulation processor mainly processes wireless communication. It may be understood that, the foregoing modulation and demodulation processor may be not integrated into the processor 680.

The mobile phone further includes power supply 690 (such as a battery) for supplying power to various parts. Preferably, the power supply may be logically connected to the processor 680 via a power management system, thereby implementing functions such as charging, discharging, and power consumption management through the power management system. Although not shown in the figure, the mobile phone may further include a camera, a Bluetooth module, and the like, which are not further described herein.

In an embodiment of the present invention, the RF circuit 610 is configured to acquire a first resource shared by a second device node, and the first resource is a part of resources within Channel Occupancy Time (COT) when the second device node accesses a first channel and initiates the COT.

Optionally, the processor 680 is configured to perform first communication according to the first resource.

Optionally, the RF circuit 610 is further configured to receive indication information for the first communication sent by the second device node; and the processor 680 is specifically configured for a first device node to perform the first communication according to the first resource and the indication information for the first communication.

Optionally, the RF circuit 610 is further configured to receive a channel access mode for the first communication sent by the second device node; and the processor 680 is specifically configured to perform the first communication according to the first resource and the channel access mode for the first communication.

Optionally, in a case where the first device node is a relay node, the processor 680 is further configured to configure a second resource for a third device node according to the first resource; and the RF circuit 610 is configured to share the second resource in the first resource to the third device node, wherein the second resource is used for the third device node to perform second communication.

Optionally, the processor 680 is further configured to generate indication information for the second communication; and the RF circuit 610 is configured to send the indication information for the second communication to the third device node, wherein the indication information for the second communication is used for the third device node to perform the second communication.

Optionally, the processor 680 is further configured to generate a channel access mode for the second communication; and the RF circuit 610 is configured to send the channel access mode for the second communication to the third device node, wherein the channel access mode for the second communication is used for the third device node to perform the second communication.

Optionally, in a case where the first device node is a relay node, the RF circuit 610 is further configured to acquire a third resource shared by the second device node for the third device node, wherein the third resource is a part of resources within Channel Occupancy Time (COT) when the second device node accesses the first channel and initiates the COT; and share the third resource to the third device node, wherein the third resource is used for the third device node to perform third communication.

Optionally, the RF Circuit 610 is further configured to receive indication information for the third communication sent by the second device node; and send the indication information for the third communication to the third device node, wherein the indication information for the third communication is used for the third device node to perform the third communication.

Optionally, the RF circuit 610 is further configured to receive a channel access mode for the third communication sent by the second device node; and send the channel access mode for the third communication to the third device node, wherein the channel access mode for the third communication is used for the third device node to perform the third communication.

Optionally, first communication, second communication, or third communication includes at least one of back-haul transmission, forward transmission, broadcast, unicast, or multicast.

Optionally, the number of back-haul transmissions is at least one, the number of forward transmissions is at least one, the number of broadcasts is at least one, the number of unicasts is at least one, and the number of multicasts is at least one.

Optionally, COT is COT for forward transmission or back-haul transmission performed by the second device node.

Optionally, the first resource is a part of resources within COT that meets a first condition, the first condition includes at least one of a first starting position, a first time length, and a first proportion; or, the second resource is a part of the first resource that meets a second condition, the second condition includes at least one of a second starting position, a second time length, and a second proportion; or, the third resource is a part of resources within the COT that meets a third condition, the third condition includes at least one of a third starting position, a third time length, and a third proportion.

Optionally, a first resource, a second resource, or a third resource is carried through Radio Resource Control (RRC), Sidelink Control Information (SCI), Uplink Control Information (UCI), Downlink Control Information (DCI), or a reference sequence.

Optionally, indication information for first communication, indication information for second communication, or indication information for third communication, is carried through RRC, SCI, UCI, DCI, or a reference sequence.

Optionally, a channel access mode for first communication, a channel access mode for second communication, or a channel access mode for third communication, is carried through RRC, SCI, UCI, DCI, or a reference sequence.

Optionally, a second device node is a device node that communicates directly or indirectly with a first device node.

Optionally, a channel access mode for first communication, a channel access mode for second communication, or a channel access mode for third communication includes: a Type2A mode, a Type2B mode, or a Type2C mode.

Optionally, a first channel is carried on an unlicensed frequency band.

The above-mentioned embodiments may be implemented in whole or in part through software, hardware, firmware, or any combination thereof. When implemented through software, they may be implemented in whole or in part in the form of a computer program product. The computer program product includes one or more computer instructions. When the computer program instructions are loaded and executed on a computer, the processes or functions are generated completely or partly according to the embodiments of the present invention. The computer may be a general purpose computer, a special purpose computer, a computer network or another programmable apparatus. The computer instructions may be stored in a computer-readable storage medium or transmitted from one computer-readable storage medium to another computer-readable storage medium, for example, the computer instructions may be transmitted from one website site, computer, server, or data center to another website site, computer, server, or data center in a wired (e.g., coaxial cable, optical fiber, and Digital Subscriber Line (DSL)) or wireless (e.g., infrared, wireless, and microwave) manner. The computer-readable storage medium may be any available medium in which the computer may store, or a data storage device such as a server or data center having one or more available media integrated therein. The available medium may be a magnetic medium (e.g., a floppy disk, a hard disk, and a magnetic tape), an optical medium (e.g., a Digital Versatile Disk (DVD)), or a semiconductor medium (e.g., a Solid State Disk (SSD)).

Terms "first", "second", "third", "fourth", and the like (if present) in the specification, claims, and drawings of the present invention are used for distinguishing between similar objects, and are not necessarily used for describing a particular order or an order of precedence. It should be understood that data used in this way may be interchanged under appropriate circumstances, so that the embodiments of the present invention described herein may be implemented in an order other than contents illustrated or described here. In addition, terms "including", "having", and any variations of them, are intended to cover non-exclusive inclusion, for example, processes, methods, systems, products, or devices that include a series of acts or units are not necessarily limited to those acts or units clearly listed, but may include other acts or units that are not clearly listed or inherent to these processes, methods, products, or devices.

## Claims

1. A channel occupancy time sharing method, comprising:
acquiring, by a first device node, a first resource shared by a second device node, wherein the first resource is a part of resources within Channel Occupancy Time (COT) when the second device node accesses a first channel and initiates the COT.

2. The method according to claim 1, further comprising:
performing, by the first device node, first communication according to the first resource.

3. The method according to claim 2, further comprising:
receiving, by the first device node, indication information for the first communication sent by the second device node;
wherein the performing, by the first device node, the first communication according to the first resource, comprises:
performing, by the first device node, the first communication according to the first resource and the indication information for the first communication.

4. The method according to claim 2 or 3, further comprising:
receiving, by the first device node, a channel access mode for the first communication sent by the second device node;
wherein the performing, by the first device node, the first communication according to the first resource, comprises:
performing, by the first device node, the first communication according to the first resource and the channel access mode for the first communication.

5. The method according to any one of claims 1 to 4, wherein in a case where the first device node is a relay node, the method further comprises:
configuring, by the first device node, a second resource for a third device node according to the first resource;
sharing, by the first device node, the second resource in the first resource to the third device node, wherein the second resource is used for the third device node to perform second communication.

6. The method according to claim 5, further comprising:
generating, by the first device node, indication information for the second communication; and
sending, by the first device node, the indication information for the second communication to the third device node, wherein the indication information for the second communication is used for the third device node to perform the second communication.

7. The method according to claim 5 or 6, further comprising:
generating, by the first device node, a channel access mode for the second communication; and
sending, by the first device node, the channel access mode for the second communication to the third device node, wherein the channel access mode for the second communication is used for the third device node to perform the second communication.

8. The method according to any one of claims 1 to 4, wherein in a case where the first device node is a relay node, the method further comprises:
acquiring, by the first device node, a third resource shared by the second device node for a third device node, wherein the third resource is a part of resources within Channel Occupancy Time (COT) when the second device node accesses the first channel and initiates the COT; and
sharing, by the first device node, the third resource to the third device node, wherein the third resource is used for the third device node to perform third communication.

9. The method according to claim 8, further comprising:
receiving, by the first device node, indication information for the third communication sent by the second device node; and
sending, by the first device node, the indication information for the third communication to the third device node, wherein the indication information for the third communication is used for the third device node to perform the third communication.

10. The method according to claim 8 or 9, further comprising:
receiving, by the first device node, a channel access mode for the third communication sent by the second device node; and
sending, by the first device node, the channel access mode for the third communication to the third device node, wherein the channel access mode for the third communication is used for the third device node to perform the third communication.

11. The method according to any one of claims 1 to 10, wherein first communication, second communication, or third communication comprises at least one of back-haul transmission, forward transmission, broadcast, unicast, or multicast.

12. The method according to claim 11, wherein a number of back-haul transmissions is at least one, a number of forward transmissions is at least one, a number of broadcasts is at least one, a number of unicasts is at least one, and a number of multicasts is at least one.

13. The method according to any one of claims 1 to 12, wherein the COT is COT for forward transmission or back-haul transmission performed by the second device node.

14. The method according to any one of claims 1 to 13, wherein the first resource is a part of resources within the COT that meets a first condition, and the first condition comprises at least one of a first starting position, a first time length, and a first proportion; or,
a second resource is a part of the first resource that meets a second condition, and the second condition comprises at least one of a second starting position, a second time length, and a second proportion; or,
a third resource is a part of resources within the COT that meets a third condition, and the third condition comprises at least one of a third starting position, a third time length, and a third proportion.

15. The method according to any one of claims 1 to 14, wherein the first resource, a second resource, or a third resource is carried through Radio Resource Control (RRC), Sidelink Control Information (SCI), Uplink Control Information (UCI), Downlink Control Information (DCI), or a reference sequence.

16. The method according to any one of claims 3, 6, and 9, wherein indication information for first communication, indication information for second communication, or indication information for third communication, is carried through Radio Resource Control (RRC), Sidelink Control Information (SCI), Uplink Control Information (UCI), Downlink Control Information (DCI), or a reference sequence.

17. The method according to any one of claims 3, 4, 6, 7, 9, and 10, wherein a channel access mode for first communication, a channel access mode for second communication, or a channel access mode for third communication, is carried through Radio Resource Control (RRC), Sidelink Control Information (SCI), Uplink Control Information (UCI), Downlink Control Information (DCI), or a reference sequence.

18. The method according to any one of claims 1 to 17, wherein the second device node is a device node that communicates directly or indirectly with the first device node.

19. The method according to any one of claims 3, 4, 6, 7, 9, and 10, wherein a channel access mode for first communication, a channel access mode for second communication, or a channel access mode for third communication comprises: a Type2A mode, a Type2B mode, or a Type2C mode.

20. The method according to any one of claims 1 to 19, wherein the first channel is carried on an unlicensed frequency band.

21. A device node, comprising:
an acquisition module, configured to acquire a first resource shared by a second device node, wherein the first resource is a part of resources within Channel Occupancy Time (COT) when the second device node accesses a first channel and initiates the COT.

22. The device node according to claim 21, wherein the device node further comprises:
a processing module, configured to perform first communication according to the first resource.

23. The device node according to claim 22, wherein,
the acquisition module is further configured to receive indication information for the first communication sent by the second device node; and
the processing module is specifically configured for a first device node to perform the first communication according to the first resource and the indication information for the first communication.

24. The device node according to claim 22 or 23, wherein,
the acquisition module is further configured to receive a channel access mode for the first communication sent by the second device node; and
the processing module is specifically configured to perform the first communication according to the first resource and the channel access mode for the first communication.

25. The device node according to any one of claims 21 to 24, wherein in a case where a first device node is a relay node, the device node further comprises:
a processing module, further configured to configure a second resource for a third device node according to the first resource; and
a sending module, configured to share the second resource in the first resource to the third device node, wherein the second resource is used for the third device node to perform second communication.

26. The device node according to claim 25, wherein,
the processing module is further configured to generate indication information for the second communication; and
the sending module is configured to send the indication information for the second communication to the third device node, wherein the indication information for the second communication is used for the third device node to perform the second communication.

27. The device node according to claim 25 or 26, wherein,
the processing module is further configured to generate a channel access mode for the second communication; and
the sending module is configured to send the channel access mode for the second communication to the third device node, wherein the channel access mode for the second communication is used for the third device node to perform the second communication.

28. The device node according to any one of claims 21 to 24, wherein in a case where a first device node is a relay node,
the acquisition module is further configured to acquire a third resource shared by the second device node for the third device node, wherein the third resource is a part of resources within the Channel Occupancy Time (COT) when the second device node accesses the first channel and initiates the COT; and
a sending module, configured to share the third resource to the third device node, wherein the third resource is used for the third device node to perform third communication.

29. The device node according to claim 28, wherein,
the acquisition module is further configured to receive indication information for the third communication sent by the second device node; and
the sending module is further configured to send the indication information for the third communication to the third device node, wherein the indication information for the third communication is used for the third device node to perform the third communication.

30. The device node according to claim 28 or 29, wherein,
the acquisition module is further configured to receive a channel access mode for the third communication sent by the second device node; and
the sending module is further configured to send the channel access mode for the third communication to the third device node, wherein the channel access mode for the third communication is used for the third device node to perform the third communication.

31. The device node according to any one of claims 21 to 30, wherein first communication, second communication, or third communication comprises at least one of back-haul transmission, forward transmission, broadcast, unicast, or multicast.

32. The device node according to claim 31, wherein a number of back-haul transmissions is at least one, a number of forward transmissions is at least one, a number of broadcasts is at least one, a number of unicasts is at least one, and a number of multicasts is at least one.

33. The device node according to any one of claims 21 to 32, wherein the COT is COT for forward transmission or back-haul transmission performed by the second device node.

34. The device node according to any one of claims 21 to 33, wherein the first resource is a part of resources within the COT that meets a first condition, and the first condition comprises at least one of a first starting position, a first time length, and a first proportion; or,
a second resource is a part of the first resource that meets a second condition, and the second condition comprises at least one of a second starting position, a second time length, and a second proportion; or,
a third resource is a part of resources within the COT that meets a third condition, and the third condition comprises at least one of a third starting position, a third time length, and a third proportion.

35. The device node according to any one of claims 21 to 34, wherein the first resource, a second resource, or a third resource is carried through Radio Resource Control (RRC), Sidelink Control Information (SCI), Uplink Control Information (UCI), Downlink Control Information (DCI), or a reference sequence.

36. The device node according to any one of claims 23, 26, and 29, wherein indication information for first communication, indication information for second communication, or indication information for third communication, is carried through Radio Resource Control (RRC), Sidelink Control Information (SCI), Uplink Control Information (UCI), Downlink Control Information (DCI), or a reference sequence.

37. The device node according to any one of claims 23, 24, 26, 27, 29, and 30, wherein a channel access mode for first communication, a channel access mode for second communication, or a channel access mode for third communication, is carried through Radio Resource Control (RRC), Sidelink Control Information (SCI), Uplink Control Information (UCI), Downlink Control Information (DCI), or a reference sequence.

38. The device node according to any one of claims 21 to 37, wherein the second device node is a device node that communicates directly or indirectly with a first device node.

39. The device node according to any one of claims 23, 24, 26, 27, 29, and 30, wherein a channel access mode for first communication, a channel access mode for second communication, or a channel access mode for third communication comprises: a Type2A mode, a Type2B mode, or a Type2C mode.

40. The device node according to any one of claims 21 to 39, wherein the first channel is carried on an unlicensed frequency band.

41. A device node, comprising:
a transceiver, configured to acquire a first resource shared by a second device node, wherein the first resource is a part of resources within Channel Occupancy Time (COT) when the second device node accesses a first channel and initiates the COT.

42. The device node according to claim 41, wherein the device node further comprises:
a processor, configured to perform first communication according to the first resource.

43. The device node according to claim 42, wherein,
the transceiver is further configured to receive indication information for the first communication sent by the second device node; and
the processor is specifically configured for a first device node to perform the first communication according to the first resource and the indication information for the first communication.

44. The device node according to claim 42 or 43, wherein,
the transceiver is further configured to receive a channel access mode for the first communication sent by the second device node; and
the processor is specifically configured to perform the first communication according to the first resource and the channel access mode for the first communication.

45. The device node according to any one of claims 41 to 44, wherein in a case where a first device node is a relay node, the device node further comprises:
a processor, further configured to configure a second resource for a third device node according to the first resource;
the transceiver is configured to share the second resource in the first resource to the third device node, wherein the second resource is used for the third device node to perform second communication.

46. The device node according to claim 45, wherein,
the processor is further configured to generate indication information for the second communication; and
the transceiver is configured to send the indication information for the second communication to the third device node, wherein the indication information for the second communication is used for the third device node to perform the second communication.

47. The device node according to claim 45 or 46, wherein,
the processor is further configured to generate a channel access mode for the second communication; and
the transceiver is configured to send the channel access mode for the second communication to the third device node, wherein the channel access mode for the second communication is used for the third device node to perform the second communication.

48. The device node according to any one of claims 41 to 44, wherein in a case where a first device node is a relay node,
the transceiver is further configured to acquire a third resource shared by the second device node for a third device node, wherein the third resource is a part of resources within Channel Occupancy Time (COT) when the second device node accesses the first channel and initiates the COT; and share the third resource to the third device node, wherein the third resource is used for the third device node to perform third communication.

49. The device node according to claim 48, wherein,
the transceiver is further configured to receive indication information for the third communication sent by the second device node; and send the indication information for the third communication to the third device node, wherein the indication information for the third communication is used for the third device node to perform the third communication.

50. The device node according to claim 48 or 49, wherein,
the transceiver is further configured to receive a channel access mode for the third communication sent by the second device node; and send the channel access mode for the third communication to the third device node, wherein the channel access mode for the third communication is used for the third device node to perform the third communication.

51. The device node according to any one of claims 41 to 50, wherein first communication, second communication, or third communication comprises at least one of back-haul transmission, forward transmission, broadcast, unicast, or multicast.

52. The device node according to claim 51, wherein a number of back-haul transmissions is at least one, a number of forward transmissions is at least one, a number of broadcasts is at least one, a number of unicasts is at least one, and a number of multicasts is at least one.

53. The device node according to any one of claims 41 to 52, wherein the COT is COT for forward transmission or back-haul transmission performed by the second device node.

54. The device node according to any one of claims 41 to 53, wherein the first resource is a part of resources within the COT that meets a first condition, and the first condition comprises at least one of a first starting position, a first time length, and a first proportion; or,
a second resource is a part of the first resource that meets a second condition, and the second condition comprises at least one of a second starting position, a second time length, and a second proportion; or,
a third resource is a part of resources within the COT that meets a third condition, and the third condition comprises at least one of a third starting position, a third time length, and a third proportion.

55. The device node according to any one of claims 41 to 54, wherein the first resource, a second resource, or a third resource is carried through Radio Resource Control (RRC), Sidelink Control Information (SCI), Uplink Control Information (UCI), Downlink Control Information (DCI), or a reference sequence.

56. The device node according to any one of claims 43, 46, and 49, wherein indication information for first communication, indication information for second communication, or indication information for third communication, is carried through Radio Resource Control (RRC), Sidelink Control Information (SCI), Uplink Control Information (UCI), Downlink Control Information (DCI), or a reference sequence.

57. The device node according to any one of claims 43, 44, 46, 47, 49, and 50, wherein a channel access mode for first communication, a channel access mode of second communication, or a channel access mode of third communication, is carried through Radio Resource Control (RRC), Sidelink Control Information (SCI), Uplink Control Information (UCI), Downlink Control Information (DCI), or a reference sequence.

58. The device node according to any one of claims 41 to 57, wherein the second device node is a device node that communicates directly or indirectly with a first device node.

59. The device node according to any one of claims 43, 44, 46, 47, 49, and 50, wherein a channel access mode for first communication, a channel access mode of second communication, or a channel access mode of third communication comprises: a Type2A mode, a Type2B mode, or a Type2C mode.

60. The device node according to any one of claims 41 to 59, wherein the first channel is carried on an unlicensed frequency band.

61. A computer-readable storage medium comprising instructions that, when run on a computer, enable a computer to perform the method according to claims 1 to 20.
